# EUROPEAN PATENT APPLICATION

(11) **EP 4 769 961 A1**
(43) Date of publication of application: **01.07.2026**
(21) Application number: 25223232.7
(22) Date of filing: 15.12.2025
(51) Int. Cl.: H04B 3/54, H02J 3/38

(54) **SELF-NETWORKING METHOD FOR MODULE CONTROLLER, AND POWER CONVERTER**

(30) Priority: 31.12.2024 CN 202411997700
(71) Applicant: Sungrow (Shanghai) Co., Ltd., Shanghai 201107 (CN)
(72) Inventor: YANG, Hui, Shanghai (CN); CHEN, Shangwen, Shanghai (CN); HE, Yi, Shanghai (CN); ZHANG, Gan, Shanghai (CN); YAO, Keliang, Shanghai (CN)
(74) Representative: Zacco Norway AS

(57) **Abstract**

The present disclosure provides a self-networking method for a module controller, and related devices, to improve the self-networking efficiency for the module controller. The self-networking method includes: obtaining a PLC link quality value between each module controller and a power converter and obtaining a PLC link quality value between the module controller and other module controller of the multiple module controllers; dividing the multiple module controllers into at least one module controller category based on the PLC link quality values, where each module controller category includes at least one candidate module controller, and the candidate module controller indicates a module controller having an actual physical connection with the power converter; and networking the candidate module controllers in the at least one module controller category by category to obtain a module controller network, where the module controller network includes multiple networked module controllers.

## Description

### FIELD

The present disclosure relates to the technical field of renewable energy, and in particular to a self-networking method for a module controller, and a power converter.

### BACKGROUND

As global reliance on renewable energy gradually increases, a renewable energy power station, as an important component of clean energy, is becoming increasingly prominent in power supply systems. To better control the renewable energy power station (such as a photovoltaic power station), a power converter and a module controller are typically used to manage a power generation component. The power converter determines a position of each module controller to facilitate command control and status positioning for each module controller during later operations. Therefore, the module controller is to be networked.

During a networking process, an entire logical topology is determined by using an automation software identification strategy in the conventional solutions, and a temporary network is established between the power converter and the module controller, resulting in low networking efficiency.

### SUMMARY

A self-networking method for a module controller, and a power converter are provided according to the present disclosure.

In a first aspect, a self-networking method for a module controller is provided according to an embodiment of the present disclosure. The self-networking method includes: obtaining, for each of multiple module controllers, a PLC link quality value between the module controller and a power converter, and obtaining a PLC link quality value between the module controller and other module controller of the multiple module controllers; dividing the multiple module controllers into at least one module controller category based on the PLC link quality values, where each of the at least one module controller category includes at least one candidate module controller, and the at least one candidate module controller is used to indicate a module controller having an actual physical connection with the power converter; and networking the candidate module controllers in the at least one module controller category by category to obtain a module controller network, where the module controller network includes multiple networked module controllers.

In a second aspect, a power converter is provided according to an embodiment of the present disclosure. The power converter includes a memory, a controller, and a direct current conversion unit. The direct current conversion unit is configured to convert a direct current power into an alternating current power. The memory is configured to store an instruction. The memory and the controller are interconnected via circuitry. The controller is configured to: obtain, for each of multiple module controllers, a PLC link quality value between the module controller and a power converter, and obtain a PLC link quality value between the module controller and other module controller of the multiple module controllers; divide the multiple module controllers into at least one module controller category based on the PLC link quality values, where each of the at least one module controller category includes at least one candidate module controller, and the at least one candidate module controller is used to indicate a module controller having an actual physical connection with the power converter; and network the candidate module controllers in the at least one module controller category by category to obtain a module controller network, where the module controller network includes multiple networked module controllers.

In the technical solution according to the embodiments of the present disclosure, a PLC link quality value between each module controller and the power converter and a PLC link quality value between the module controller and other module controller are obtained; multiple module controllers are divided into at least one module controller category based on the PLC link quality values, where each module controller category includes at least one candidate module controller, and the candidate module controller indicates a module controller having an actual physical connection with the power converter; and the candidate module controllers in the at least one module controller category are networked by category to obtain a module controller network, where the module controller network includes multiple networked module controllers. According to the embodiments of the present disclosure, during the self-networking process, a temporary network is not established for the candidate module controllers, reducing the usage of unicast communication and improving the self-networking efficiency for the module controllers.

### BRIEF DESCRIPTION OF THE DRAWINGS

FIG. 1 is a schematic flowchart showing a self-networking method for a module controller according to an embodiment of the present disclosure;
FIG. 2 is a schematic diagram showing composition of a photovoltaic power generation system according to an embodiment of the present disclosure;
FIG. 3 is a schematic diagram showing composition of a photovoltaic string according to an embodiment of the present disclosure;
FIG. 4 is a schematic diagram of a target link quality information table according to an embodiment of the present disclosure;
FIG. 5 is a schematic flowchart showing a self-networking method for a module controller according to another embodiment of the present disclosure;
FIG. 6 is a schematic flowchart showing a self-networking method for a module controller according to another embodiment of the present disclosure;
FIG. 7A is a schematic flowchart showing a self-networking method for a module controller according to another embodiment of the present disclosure;
FIG. 7B is a schematic diagram showing a connection of a module controller according to an embodiment of the present disclosure;
FIG. 7C is a schematic diagram showing a connection of multiple module controllers according to an embodiment of the present disclosure;
FIG. 8 is a schematic diagram of a self-networking apparatus for a module controller according to an embodiment of the present disclosure; and
FIG. 9 is a schematic diagram of a power converter according to an embodiment of the present disclosure.

### DETAILED DESCRIPTION

A self-networking method and apparatus for a module controller, a power converter, a power system, and a storage medium are provided according to the present disclosure. Multiple candidate module controllers are networked based on a PLC link quality value between each module controller and a power converter and a PLC link quality value between the module controller and other module controller, to solve the problem of establishing a temporary network during the self-networking process for the module controllers, and to improve the self-networking efficiency for the module controllers.

The terms such as "first", "second", "third", "fourth" and the like (if any) in the description, claims and drawings are only used to distinguish similar objects from each other, rather than describe a particular or chronological order. It should be understood that data used in such manner may be interchanged appropriately, so that the embodiments of the present disclosure may be, for example, implemented in an order other than those illustrated or described herein. Moreover, the terms "include," "comprise", and any other variants thereof are intended to cover the non-exclusive inclusion. For example, a process, a method, a system, a product, or a device that includes a list of steps or units is not necessarily limited to those expressly listed steps or units, but may include other steps or units not expressly listed or inherent in such process, method, product, or device.

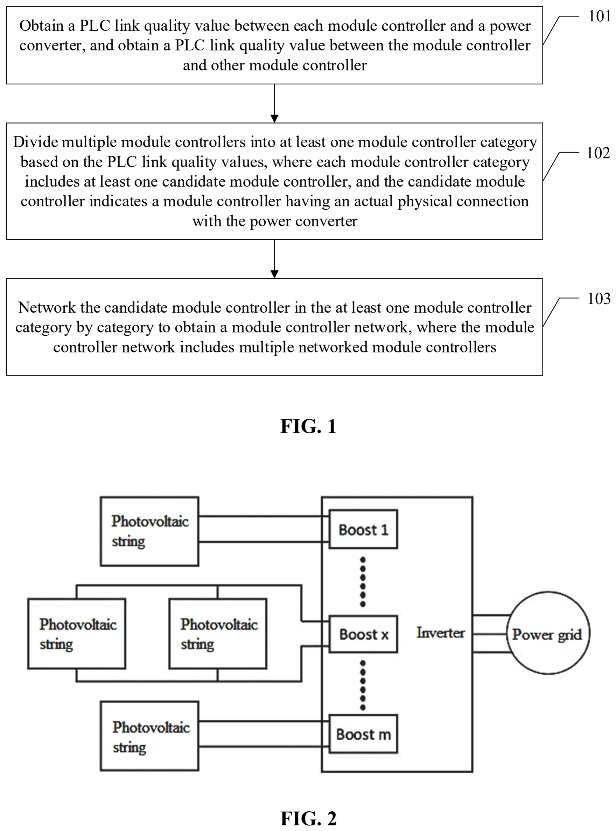

Referring to FIG. 1, FIG. 1 is a flowchart of a self-networking method for a module controller according to an embodiment of the present disclosure, including the following steps 101 to 103.

In 101, a PLC link quality value between each module controller and a power converter is obtained, and a PLC link quality value between the module controller and other module controller is obtained.

In an embodiment, the power converter is controlled to search for multiple module controllers and a PLC link quality information table fed back by each module controller is obtained, to obtain multiple PLC link quality information tables. The PLC link quality information table indicates PLC link quality between an initial module controller and other initial module controller and PLC link quality between the initial module controller and the power converter.

In an embodiment, multiple PLC link quality information tables may be synthesized into a target link quality information table for the power converter, and repeated parts are deleted. The target link quality information table may show both uplink PLC link quality and downlink PLC link quality between one module controller and one power converter, and the target link quality information table may also show PLC link quality between two module controllers.

The present disclosure is applicable to the technical field of renewable energy. For ease of understanding, a photovoltaic scenario is taken as an example to describe in the embodiments of the present disclosure and subsequent embodiments.

In an embodiment, the power converter, after being powered on, broadcasts a search command at a preset time interval, and each qualified module controller reports a broadcast response message based on the search command in a competition manner through a Carrier Sense Multiple Access with Collision Avoid (CSMA/CA) mechanism. The broadcast response message carries an identification for a module controller and a PLC link quality information table. The PLC link quality information table records the PLC link quality value between the module controller and the power converter, and the PLC link quality information table also records the PLC link quality value between two module controllers. For example, on receipt of a data message from other module controller (for example, a module controller B), a module controller A records a PLC link quality value between the module controller B and the module controller A, and also records the PLC link quality value between the module controller A and the power converter to create the PLC link quality information table.

In an embodiment, each time the power converter broadcasts a search command, the search command carries a query sequence number (seq_num), a reporting time limit (maxseq_time), and an identification code list (conf_list) for the previous search. The module controller logically determines whether to report its own information based on the three types of information (seq_num, maxseq_time, and conf_list). The identification code list is empty in the search command for the first search.

Power Line Carrier (PLC) is a telecommunications transmission manner that uses high-voltage power lines in a power system for communication. PLC communication includes: transmitting a signal into a transmitting branch of the PLC, modulating the signal into a high-frequency signal of 80kHz-490kHz, transmitting the high-frequency signal into one or two phases of a high-voltage power line through a combination device, transmitting the high-frequency signal through lines to a receiving end, then transmitting the high-frequency signal to a receiving branch of a PLC device through a coupling device of the receiving end, and demodulating the high-frequency signal back into the original signal. Using one phase is referred to as a "phase-to-ground" coupling wiring manner, while using two phases is referred to as a "phase-to-phase" coupling wiring manner. A channel quality from the power converter to the module controller is represented as a downlink PLC link quality value, and a channel quality from the module controller to the power converter is represented as an uplink PLC link quality value. The PLC link quality value reflects the quality of the communication link. A greater PLC link quality value indicates better quality of the communication link. Moreover, communication links with actual physical connections have smaller channel attenuation, smaller channel noise and better link quality compared with communication links without actual physical connections. Therefore, use of the link quality value may determine an apparatus having an actual physical connection with a local apparatus. The power converter may be an inverter or another apparatus with a power conversion function, which is not limited here.

It should be noted that not all module controllers send broadcast response messages. Each module controller determines whether the uplink PLC link quality value or downlink PLC link quality value carried in the search command is greater than or equal to a PLC link quality minimum response threshold, feeds back the broadcast response message if the uplink PLC link quality value or the downlink PLC link quality value is greater than or equal to the PLC link quality minimum response threshold, and filters out the search command and makes no response if both the uplink and downlink PLC link quality values are less than the PLC link quality minimum response threshold.

The execution subject according to the embodiments of the present disclosure may be a self-networking apparatus for a module controller, a power converter, or another apparatus with processing capabilities. For ease of description, the power converter is taken as an example in the embodiments of the present disclosure and subsequent embodiments.

It is understandable that in the embodiments of the present disclosure and subsequent embodiments, the applied photovoltaic power generation system is provided with the module controller, and the module controller may be an optimizer or a shutdown device. For ease of description, the optimizer is taken as an example in the embodiments of the present disclosure and subsequent embodiments.

For example, as shown in FIG. 2, the photovoltaic power generation system includes multiple photovoltaic strings and one power converter. The power converter is connected to the power grid. The power converter is connected to an applicable single-phase power grid or three-phase power grid, depending on a model of the power converter. The power converter internally includes m Boost converters, where m is a positive integer greater than or equal to 1. Each Boost converter has an input port, which is a Boost port, also known as a maximum power point tracking (MPPT) port. Each Boost port may include multiple photovoltaic string ports (referred to as PV ports) connected in parallel within the power converter, or the Boost port may directly serve as one PV port, that is, each PV port may be connected to one photovoltaic string or two photovoltaic strings connected in parallel through a combiner terminal. It should be understood that the boost in the embodiments of the present disclosure is merely an example and not a limitation, and a buck may also be used, which is not limited here, as long as being a DC/DC converter.

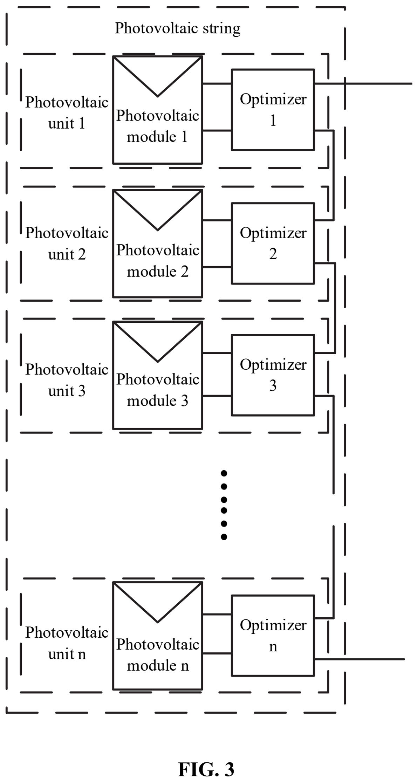

When the photovoltaic power generation system is fully provided with optimizers, each photovoltaic string includes n photovoltaic units, and each of the photovoltaic units includes a photovoltaic module and an optimizer. The photovoltaic unit includes at least one photovoltaic module connected to an input end of the optimizer. Output ends of all optimizers in the photovoltaic string are connected in series, that is, a positive output terminal of one optimizer is connected to a negative output terminal of a previous optimizer, and a negative output terminal of the optimizer is connected to a positive output terminal of a next optimizer, and the all optimizers connected in series are connected to a PV port of the power converter. Detailed connection of each photovoltaic string is shown in FIG. 3. The value of n depends on the model of the power converter. For example, when the power converter is a single-phase power converter, n may be set to less than or equal to 25; and when the power converter is a three-phase power converter, n is less than or equal to 35.

It should be noted that the number of photovoltaic units may be different in different photovoltaic strings connected to a same photovoltaic power generation system, the series-parallel configuration may be different for photovoltaic strings connected to different Boost ports, and the power may be different for photovoltaic units.

In 102, multiple module controllers are divided into at least one module controller category based on the PLC link quality values, where each module controller category includes at least one candidate module controller, and the candidate module controller indicates a module controller having an actual physical connection with the power converter.

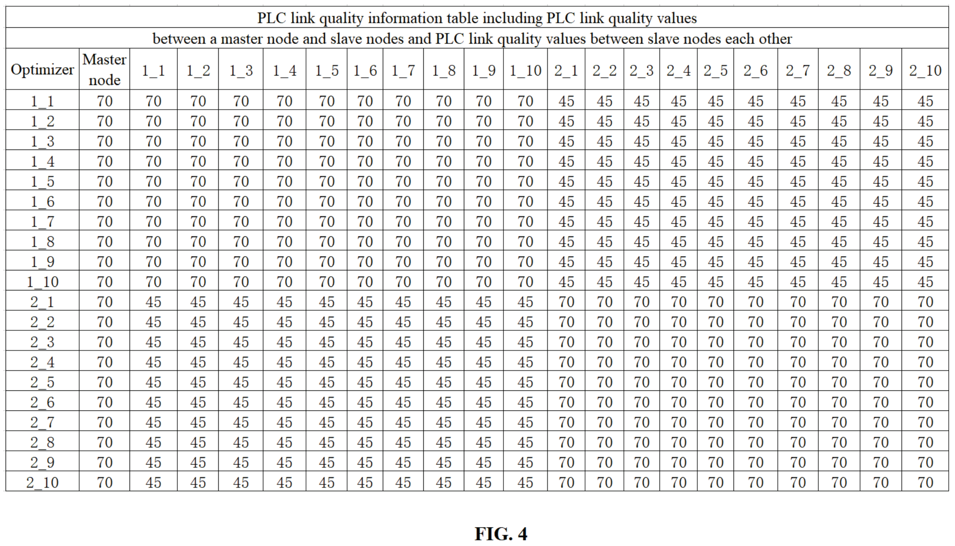

As shown in FIG. 4, the first column represents slave nodes (module controllers) for sending messages, and the second row represents a master node (the power converter) and slave nodes for receiving messages. For example, the PLC link quality value from a slave node 1.1 to a slave node 1.2 is 70, and the PLC link quality value from the slave node 1.1 to a slave node 2.1 is 45. Each two slave nodes associated with a PLC link quality value greater than a first quality threshold (such as 50dBm) are determined to have an actual physical connection between each other, and each two slave nodes associated with a PLC link quality value less than the first quality threshold are determined to have no actual physical connection between each other. Thus, for the slave nodes 1.1 to 1.10 in the top-left corner of FIG. 4, the PLC link quality values between each other are 70, thereby dividing module controllers corresponding to these slave nodes as one module controller category, that is, the slave nodes 1.1 to 1.10 belong to one photovoltaic string. Similarly, for the slave nodes 2.1 to 2.10 in the bottom-right corner of FIG. 4, the PLC link quality values between each other are 70, thereby dividing module controllers corresponding to these slave nodes as another module controller category, that is, the slave nodes 2.1 to 2.10 belong to another photovoltaic string.

In 103, the candidate module controllers in the at least one module controller category are networked by category to obtain a module controller network, where the module controller network includes multiple networked module controllers.

It should be noted that the module controller network corresponds to at least one photovoltaic string, and the candidate module controllers in one photovoltaic string are networked.

According to the embodiments of the present disclosure, multiple candidate module controllers are networked based on a PLC link quality value between each module controller and the power converter and a PLC link quality value between the module controller and other module controller. During the self-networking process, a temporary network is not established for the candidate module controllers, reducing the usage of unicast communication and improving the self-networking efficiency for the module controllers.

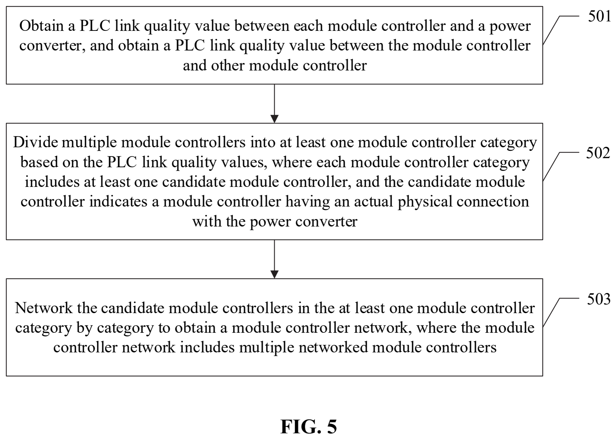

Referring to FIG. 5, FIG. 5 is a flowchart of a self-networking method for a module controller according to another embodiment of the present disclosure, including the following steps 501 to 503.

In 501, a PLC link quality value between each module controller and a power converter is obtained, and a PLC link quality value between the module controller and other module controller is obtained.

It should be noted that not all module controllers send broadcast response messages. On receipt of a search command (discovery_command), each module controller determines whether to respond and whether the received uplink PLC link quality value or downlink PLC link quality value is greater than or equal to the PLC link quality minimum response threshold, filters out the search command and makes no response if both the received uplink PLC link quality value and the downlink PLC link quality value are less than the PLC link quality minimum response threshold, and feeds back the broadcast response message if the received uplink PLC link quality value or the downlink PLC link quality value is greater than or equal to the PLC link quality minimum response threshold. Then, the module controller starts the CSMA/CA mechanism to report the broadcast response message (response_data) in a competition manner and starts timing. The broadcast response message carries a generated initial identification code (iden _code) and the PLC link quality value. The initial identification code is used to identify a site of the module controller, and the PLC link quality value is used to reflect the link quality between the module controller and the power converter. If it is found that the timer reaches maxseq_time and the module controller has unsuccessfully reported due to unsuccessful competition, the module controller stops reporting and waits for receiving a next search command to report again.

In an embodiment, the process of obtaining the PLC link quality value between each module controller and the power converter and obtaining the PLC link quality value between the module controller and other module controller incudes: controlling the power converter to broadcast a search command on a public frequency band, where the search command includes a PLC link quality detection command and a PLC link quality minimum response threshold; and receiving, by the power converter, broadcast response messages fed back by multiple candidate module controllers to obtain the multiple candidate module controllers and corresponding uplink PLC link quality value for each candidate module controller, where the uplink PLC link quality value refers to PLC link quality values from the candidate module controller to the power converter; the multiple candidate module controllers are part of the multiple module controllers whose detected downlink PLC link quality values each are greater than or equal to the PLC link quality minimum response threshold; and the downlink PLC link quality value refers to the PLC link quality value from the power converter to the candidate module controller.

In an embodiment, the process of obtaining the PLC link quality value between each module controller and the power converter and obtaining the PLC link quality value between the module controller and other module controller incudes: controlling the power converter to broadcast a search command on a public frequency band, where the search command includes a PLC link quality detection command; receiving, by the power converter, broadcast response messages fed back by module controllers to obtain multiple uplink PLC link quality values, where the uplink PLC link quality value refers to the PLC link quality value from the module controller to the power converter; and determining part of the multiple module controllers whose uplink PLC link quality values each are greater than or equal to a PLC link quality minimum response threshold as multiple candidate module controllers.

In an embodiment, the process of obtaining the PLC link quality value between each module controller and the power converter and obtaining the PLC link quality value between the module controller and other module controller incudes: controlling the power converter to broadcast a search command on a public frequency band, where the search command includes a PLC link quality detection command and a PLC link quality minimum response threshold; receiving, by the power converter, broadcast response messages fed back by multiple filtered module controllers to obtain the multiple filtered module controllers and multiple uplink PLC link quality values, where the multiple filtered module controllers are part of the multiple module controllers whose detected downlink PLC link quality values each are greater than or equal to the PLC link quality minimum response threshold, the uplink PLC link quality value refers to PLC link quality value from the module controllers to the power converter, and the downlink PLC link quality value refers to PLC link quality value from the power converter to the multiple filtered module controllers; and determining part of the multiple filtered module controllers whose uplink PLC link quality values each are greater than or equal to the PLC link quality minimum response threshold as the multiple candidate module controllers.

In the embodiment of the present disclosure and subsequent embodiments, the PLC link quality value is in terms of the module controllers that have successfully reported. For other module controllers that have unsuccessfully reported, they may report in a next round of search command in a completion manner through the CSMA/CA mechanism.

For example, after completing a first round of search command, the power converter, based on the information reported by the initial module controllers, keeps the query sequence number unchanged, repackages and sends the search command (discovery _command), carrying the identification code list (code_list) composed of the initial identification codes (iden _code) of all module controllers that have successfully reported in the previous round. The process gradually converges, ultimately achieving a balance between search time and efficiency, thereby solving the problem of incomplete search and long search time for the power converter, and the module controller failing to support simultaneous searches for multiple power converters.

In 502, the multiple module controllers are divided into at least one module controller category based on the PLC link quality values, where each module controller category includes at least one candidate module controller, and the candidate module controller indicates a module controller having an actual physical connection with the power converter.

In an embodiment, for each two module controllers of the multiple module controllers, a PLC link quality value between the two module controllers is determined; and if any two candidate module controllers meet a preset condition, then the two candidate module controllers are classified as same one module controller category to create at least one module controller category, where the preset condition is that the PLC link quality value of the two candidate module controllers is greater than or equal to a first quality threshold.

It should be noted that, based on comparing the uplink PLC link quality value or downlink PLC link quality value with the PLC link quality minimum response threshold, the module controllers corresponding to uplink PLC link quality value greater than or equal to the PLC link quality minimum response threshold are determined as candidate module controllers, or the module controllers corresponding to downlink PLC link quality value greater than or equal to the PLC link quality minimum response threshold are determined as candidate module controllers, then the PLC link quality value between any two candidate module controllers is compared with the first quality threshold, and the candidate module controllers with the PLC link quality values greater than or equal to the first quality threshold are classified as the same one module controller category. The PLC link quality values reflect PLC communication quality between each module controller and other module controller, and PLC communication quality between the module controller and the power converter. The module controller and the power converter each are configured with corresponding algorithms to calculate the PLC communication quality. The module controller and the power converter may directly measure a strength of a carrier signal on the PLC and display the strength in a specific unit (such as dBm, dB µ V and the like). When the module controller has an actual physical connection with the power converter, the PLC link quality value between them is greater, for example, 70dBm. When the module controller has no actual physical connection with the power converter, they rely only on energy space coupling, and the PLC link quality value between them is lower, for example, 45dBm. As shown in FIG. 4, if the PLC link quality value between slave node and master node is less than the PLC link quality minimum response threshold, then these module controllers will be filtered out, if the PLC link quality value between slave node and master node is greater than or equal to the PLC link quality minimum response threshold, then these module controllers will be marked as candidate module controllers. Further, the PLC link quality value between any two candidate module controllers is compared with the first quality threshold, if the PLC link quality value between two candidate module controllers is greater than or equal to the first quality threshold, then these two candidate module controllers will be classified as the same one module controller category, if the PLC link quality value between two candidate module controllers is less than the first quality threshold, then these two candidate module controllers will not be classified as the same one module controller category.

In 503, the candidate module controllers in the at least one module controller category are networked by category to obtain a module controller network, where the module controller network includes multiple networked module controllers.

Step 503 is similar to step 103, and details are not repeated here.

According to the embodiments of the present disclosure, multiple candidate module controllers are networked based on a PLC link quality value between each module controller and the power converter and a PLC link quality value between the module controller and other module controller. During the self-networking process, a temporary network is not established for the candidate module controllers, reducing the usage of unicast communication and improving the self-networking efficiency for the module controllers.

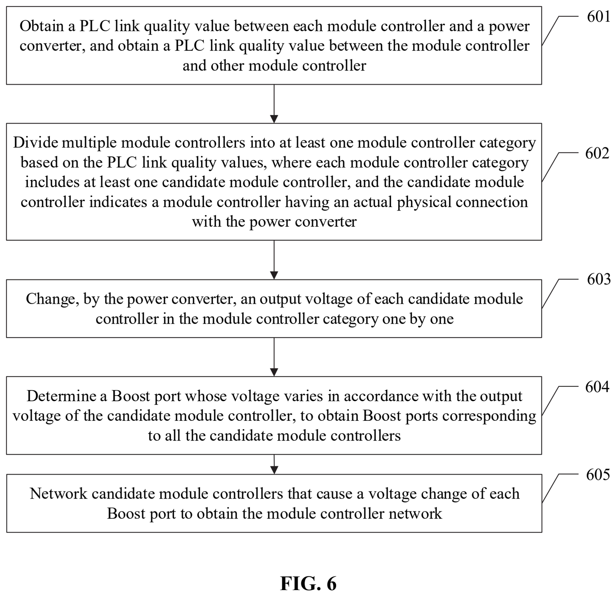

Referring to FIG. 6, FIG. 6 is a flowchart of a self-networking method for a module controller according to another embodiment of the present disclosure, including the following steps 601 to 605.

In 601, a PLC link quality value between each module controller and a power converter is obtained, and a PLC link quality value between the module controller and other module controller is obtained.

In 602, the multiple module controllers are divided into at least one module controller category based on the PLC link quality values, where each module controller category includes at least one candidate module controller, and the candidate module controller indicates a module controller having an actual physical connection with the power converter.

Steps 601 to 602 are similar to steps 501 to 502, and details are not repeated here.

In 603, an output voltage of each candidate module controller in the module controller category is changed by the power converter one by one.

For example, during changing the output voltages one by one, an output voltage of a first module controller is first changed, and then an output voltage of a second module controller is changed, such as the voltage of any module controller in the module controller network.

In 604, a Boost port whose voltage varies in accordance with the output voltage of the candidate module controller is determined, to obtain Boost ports corresponding to all the candidate module controllers.

For example, when the output voltage of the first module controller is changed, if a voltage change is detected at a Boost port 1, the first module controller corresponds to the Boost port 1.

In 605, for each of the Boost ports, candidate module controllers that cause a voltage change of the Boost port are networked to obtain the module controller network.

All candidate module controllers in one module controller category correspond to one Boost port.

According to the embodiments of the present disclosure, multiple candidate module controllers are networked based on a PLC link quality value between each module controller and the power converter and a PLC link quality value between the module controller and other module controller, and the Boost port corresponding to each module controller category is determined. During the self-networking process, a temporary network is not established for the candidate module controllers, reducing the usage of unicast communication and improving the self-networking efficiency for the module controller.

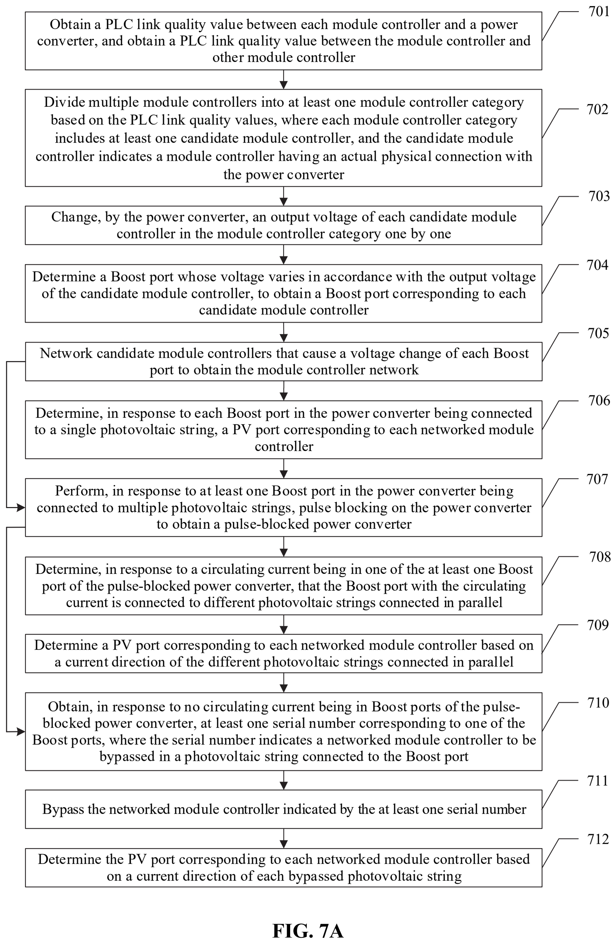

Referring to FIG. 7A, FIG. 7A is a flowchart of a self-networking method for a module controller according to another embodiment of the present disclosure, including the following steps 701 to 712.

In 701, a PLC link quality value between each module controller and a power converter is obtained, and a PLC link quality value between the module controller and other module controller is obtained.

In 702, multiple module controllers are divided into at least one module controller category based on the PLC link quality values, where each module controller category includes at least one candidate module controller, and the candidate module controller indicates a module controller having an actual physical connection with the power converter.

In 703, an output voltage of each candidate module controller in the module controller category is changed by the power converter one by one.

In 704, a Boost port whose voltage varies in accordance with the output voltage of the candidate module controller is determined, to obtain Boost ports corresponding to all the candidate module controllers.

In 705, for each of the Boost ports, candidate module controllers that cause a voltage change of the Boost port are networked to obtain the module controller network.

Steps 701 to 705 are similar to steps 601 to 605, and details are not repeated here.

In 706, if each of the Boost ports in the power converter is connected to a single photovoltaic string, a PV port corresponding to each networked module controller is determined.

It is understandable that if each of the Boost ports is connected to a single photovoltaic string, all networked module controllers in the single photovoltaic string correspond to the Boost port connected to the photovoltaic string. The photovoltaic string further includes photovoltaic units connected to the candidate module controllers, and each photovoltaic unit includes at least one photovoltaic module.

In 707, if at least one of the Boost ports of the power converter is connected to multiple photovoltaic strings, pulse blocking is performed on the power converter to obtain a pulse-blocked power converter.

It is understandable that if one Boost port is connected to two photovoltaic strings, all networked module controllers in the two photovoltaic strings correspond to the Boost port connected to the two photovoltaic strings, but which PV port each networked module controller belongs to is not determined.

In 708, if a circulating current exists in one of the Boost ports of the pulse-blocked power converter, it is determined that the Boost port with the circulating current is connected to different photovoltaic strings connected in parallel.

It is understandable that after pulse blocking is performed on the power converter, the power converter does not operate. If the circulating current still exists in the power converter in such case, it indicates that the two photovoltaic strings connected to the Boost port have a voltage difference, that is, the number of operating networked module controllers is unbalanced.

In 709, a PV port corresponding to each networked module controller is determined based on a positive current and negative current of different photovoltaic strings connected in parallel.

Among the two photovoltaic strings connected to the Boost port with the circulating current, a PV port to which a networked module controller belongs may be determined by a current direction of the networked module controller. If current of a networked module controller flows to the Boost port, that is, the current is positive, it indicates that the networked module controller is in a photovoltaic string with a high voltage and corresponds to a PV port 1. If current of a networked module controller flows out of the Boost port, that is, the current is negative, it indicates that the networked module controller is in a photovoltaic string with a low voltage and corresponds to a PV port 2.

In 710, if no circulating current is in the Boost ports of the pulse-blocked power converter, at least one serial number corresponding to one of the Boost ports is obtained, where the serial number indicates a networked module controller to be bypassed in a photovoltaic string connected to the Boost port.

It is understandable that if no circulating current is in all the Boost ports, at least one serial number corresponding to one of the Boost ports is obtained. The serial number indicates the module controller to be bypassed in the photovoltaic string corresponding to the Boost port. At this time, the number of the module controllers in the two parallel photovoltaic strings connected to the Boost port is balanced, and bypassing is performed to change the balance.

In 711, the networked module controller indicated by the at least one serial number is bypassed.

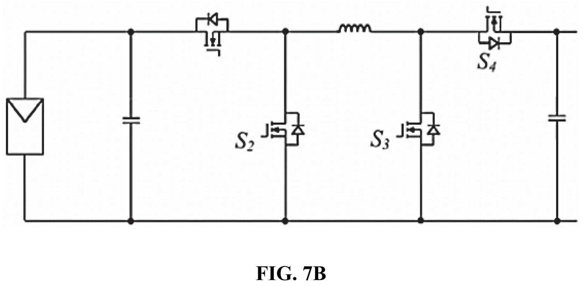

In an embodiment, the networked module controller indicated by the at least one serial number is determined as at least one to-be-bypassed module controller. An activation command is transmitted to an active bypass switching transistor in each to-be-bypassed module controller, to activate the to-be-bypassed module controller to achieve active bypass, thereby creating circulating current. As shown in FIG. 7B, S2 represents the active bypass switching transistor. On receipt of the activation command, S2 is turned on, the module controller is actively bypassed (short-circuited).

In an embodiment, after transmitting an activation command to the active bypass switching transistor in each to-be-bypassed module controller, the method further includes: in response to an unactivated networked module controller being connected between two activated module controllers, that an active bypass switching transistor in the unactivated networked module controller is in a passive bypass state

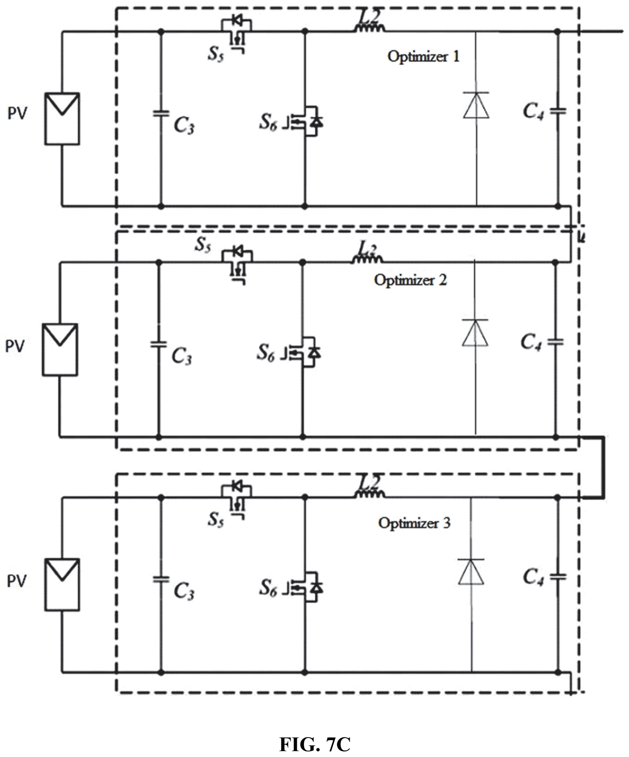

Bypassing includes active bypass and passive bypass. The active bypass refers to actively short-circuiting the networked module controller based on the serial number and the active bypass switching transistor. The passive bypass refers to a target module controller being passively bypassed (such as short-circuited through a diode) due to the activation of surrounding module controllers. As shown in FIG. 7C, the diode is a passive bypass switching transistor. On receipt of the activation command, the optimizer 1 and optimizer 3 are turned on, the diode of the optimizer 2 is passively turned on, and the optimizer 2 is passively bypassed (short-circuited).

In 712, the PV port corresponding to each networked module controller is determined based on a positive current and negative current of each bypassed photovoltaic string.

The PV port to which the networked module controller belongs may be determined by the current direction of the networked module controller. If current of a module controller flows to the Boost port, that is, the current is positive, it indicates that the module controller is in a photovoltaic string with a high voltage and corresponds to a PV port 1. If current of the module controller flows out of the Boost port, that is, the current is negative, it indicates that the module controller is in a photovoltaic string with a low voltage and corresponds to a PV port 2.

It is understood that, in addition to determining based on the direction of the current, step 712 may further be replaced with the following steps (1) and (2).

In step (1), a PV identification command is broadcasted by the power converter, where the PV identification command indicates a Boost index value in which the current is to be changed at each disturbance moment.

The PV identification command is broadcasted by the power converter, where the PV identification command indicates a Boost index value in which the current is to be changed at each disturbance moment, so that each module controller knows a Boost index identifier in which a current is to be changed at each disturbance moment.

In step (2), the current of each Boost port is changed one by one based on the Boost index value, the change of the output current of each networked module controller is determined, and the PV port corresponding to each networked module controller is determined.

The self-networking apparatus for a module controller changes the current of each Boost port one by one based on the Boost index identifier, determines the change of the output current of each networked module controller, and determines the PV port corresponding to each networked module controller.

For example, when the networked module controller knows that the current of the Boost port 1 has changed, if the current of the networked module controller itself also changes, the photovoltaic string port, that is, the PV port to which the networked module controller belongs is determined based on the direction and the change of the current.

According to the embodiments of the present disclosure, multiple candidate module controllers are networked based on a PLC link quality value between each module controller and the power converter and a PLC link quality value between the module controller and other module controller, and the Boost port corresponding to each module controller category is determined, thereby obtaining a complete physical logical topology. During the self-networking process, a temporary network is not established for the candidate module controllers, reducing the usage of unicast communication and improving the self-networking efficiency for the module controllers.

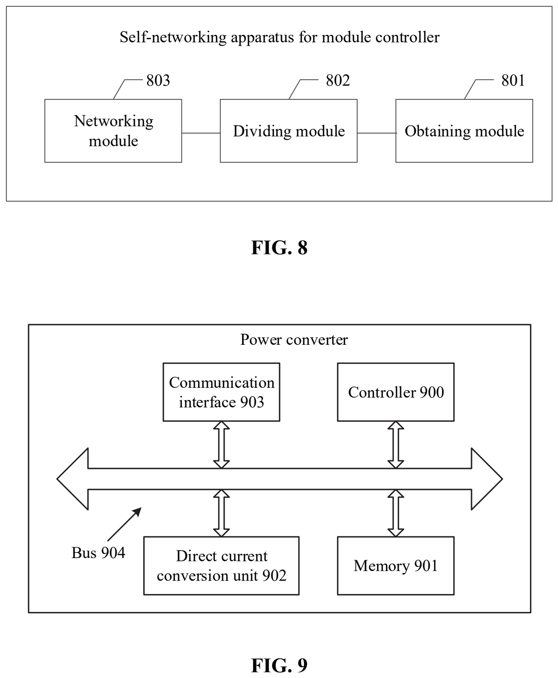

The self-networking method for the module controller according to the embodiments of the present disclosure is described above. A self-networking apparatus for a module controller according to the embodiments of the present disclosure is described below. Referring to FIG. 8, FIG. 8 is a schematic diagram of a self-networking apparatus for a module controller according to an embodiment of the present disclosure. The apparatus includes an obtaining module 801, a dividing module 802, and a networking module 803.

The obtaining module 801 is configured to obtain, for each of multiple module controllers, a PLC link quality value between the module controller and a power converter, and obtain a PLC link quality value between the module controller and other module controller of the multiple module controllers.

The dividing module 802 is configured to divide the multiple module controllers into at least one module controller category based on the PLC link quality values, where each of the at least one module controller category includes at least one candidate module controller, and the at least one candidate module controller is used to indicate a module controller having an actual physical connection with the power converter.

The networking module 803 is configured to network the candidate module controllers in the at least one module controller category by category to obtain a module controller network, where the module controller network includes multiple networked module controllers.

In an embodiment, the dividing module 802 is further configured to: classify candidate module controllers meeting a preset condition among the multiple module controllers as one module controller category to create at least one module controller category, where the preset condition is that the PLC link quality value between any two candidate module controllers is greater than or equal to a first quality threshold.

In an embodiment, the networking module 803 is further configured to: change, by the power converter, an output voltage of each of the candidate module controllers in the at least one module controller category one by one; determine a Boost port whose voltage varies in accordance with the output voltage of the candidate module controller, to obtain Boost ports corresponding to all the candidate module controllers; and network, for each of the Boost ports, candidate module controllers that cause a voltage change of the Boost port, to obtain the module controller network.

In an embodiment, the networking module 803 is further configured to: determine, in response to each Boost port in the power converter being connected to a single photovoltaic string, a PV port corresponding to each of the multiple networked module controllers.

In an embodiment, the networking module 803 is further configured to: perform, in response to at least one Boost port in the power converter being connected to multiple photovoltaic strings, pulse blocking on the power converter to obtain a pulse-blocked power converter; determine, in response to a circulating current being in one of the at least one Boost port of the pulse-blocked power converter, that the Boost port with the circulating current is connected to different photovoltaic strings connected in parallel; and determine a PV port corresponding to each of the multiple networked module controllers based on a current direction of the different photovoltaic strings connected in parallel.

In an embodiment, the networking module 803 is further configured to: obtain, in response to no circulating current being in Boost ports of the pulse-blocked power converter, at least one serial number corresponding to one of the Boost ports, where the at least one serial number is used to indicate a networked module controller to be bypassed in a photovoltaic string connected to the Boost port; bypass the networked module controller indicated by the at least one serial number; and determine the PV port corresponding to each of the multiple networked module controllers based on a current direction of each of the bypassed multiple photovoltaic strings.

In an embodiment, the networking module 803 is further configured to: obtain, in response to no circulating current being in Boost ports of the pulse-blocked power converter, at least one serial number corresponding to one of the Boost ports, where the at least one serial number is used to indicate a networked module controller to be bypassed in a photovoltaic string connected to the Boost port; bypass the networked module controller indicated by the at least one serial number; broadcast, by the power converter, a PV identification command where the PV identification command is used to indicate a Boost index identifier in which a current is to be changed at each disturbance moment; change a current of each of the Boost ports one by one based on the Boost index identifier; determine a change of an output current of each of the multiple networked module controllers; and determine the PV port corresponding to the networked module controller based on the change of the output current.

In an embodiment, the networking module 803 is further configured to: determine the networked module controller indicated by the at least one serial number as at least one to-be-bypassed module controller; and transmit an activation command to an active bypass switching transistor in each of the at least one to-be-bypassed module controller, to activate the at least one to-be-bypassed module controller to achieve active bypass.

In an embodiment, the networking module 803 is further configured to: determine, in response to an unactivated networked module controller being connected between two activated module controllers, that an active bypass switching transistor in the unactivated networked module controller is in a passive bypass state.

In an embodiment, the obtaining module 801 is further configured to: control the power converter to broadcast a search command on a public frequency band, where the search command includes a PLC link quality detection command and a PLC link quality minimum response threshold; and receive, by the power converter, broadcast response messages fed back by multiple candidate module controllers to obtain the multiple candidate module controllers and a corresponding uplink PLC link quality value for each candidate module controller, where the uplink PLC link quality value refers to PLC link quality values from the candidate module controllers to the power converter; the multiple candidate module controllers are part of the multiple module controllers whose detected downlink PLC link quality values each are greater than or equal to the PLC link quality minimum response threshold, and the downlink PLC link quality value refers to the PLC link quality value from the power converter to the module controller.

In an embodiment, the obtaining module 801 is further configured to: control the power converter to broadcast a search command on a public frequency band, where the search command includes a PLC link quality detection command; receive, by the power converter, broadcast response messages fed back by the multiple module controllers to obtain multiple uplink PLC link quality values, where the uplink PLC link quality value refers to the PLC link quality value from the module controller to the power converter; and determine part of the multiple module controllers whose uplink PLC link quality values each are greater than or equal to a PLC link quality minimum response threshold as multiple candidate module controllers.

In an embodiment, the obtaining module 801 is further configured to: control the power converter to broadcast a search command on a public frequency band, where the search command includes a PLC link quality detection command and a PLC link quality minimum response threshold; receive, by the power converter, broadcast response messages fed back by multiple filtered module controllers to obtain the multiple filtered module controllers and multiple uplink PLC link quality values, where the multiple filtered module controller are part of the multiple module controllers whose detected downlink PLC link quality values each are greater than or equal to the PLC link quality minimum response threshold, the uplink PLC link quality value refers to PLC link quality value from the module controllers to the power converter, and the downlink PLC link quality value refers to PLC link quality value from the power converter to the multiple filtered module controllers; and determine part of the multiple filtered module controllers whose uplink PLC link quality values each are greater than or equal to the PLC link quality minimum response threshold as the multiple candidate module controllers.

Referring to FIG. 9, the power converter includes a controller 900, a memory 901, and a direct current conversion unit 902. The direct current conversion unit 902 is configured to convert a direct current power into an alternating current power. The memory 901 stores a machine-executable instruction that is executed by the controller 900. The controller 900 is configured to: obtain, for each of multiple module controllers, a PLC link quality value between the module controller and a power converter, and obtain a PLC link quality value between the module controller and other module controller of the multiple module controllers; divide the multiple module controllers into at least one module controller category based on the PLC link quality values, where each of the at least one module controller category includes at least one candidate module controller, and the at least one candidate module controller is used to indicate a module controller having an actual physical connection with the power converter; and network the candidate module controllers in the at least one module controller category by category to obtain a module controller network, where the module controller network includes multiple networked module controllers.

In an embodiment, the dividing the multiple module controllers into at least one module controller category based on the PLC link quality values includes: classifying candidate module controllers meeting a preset condition among the multiple module controllers as one module controller category to create at least one module controller category, where the preset condition is that the PLC link quality value between any two candidate module controllers is greater than or equal to a first quality threshold.

In an embodiment, the networking the candidate module controllers in the at least one module controller category by category to obtain a module controller network includes: changing, by the power converter, an output voltage of each of the candidate module controllers in the module controller category one by one; determining a Boost port whose voltage varies in accordance with the output voltage of the candidate module controller, to obtain Boost ports corresponding to all the candidate module controllers; and networking, for each of the Boost ports, candidate module controllers that cause a voltage change of the Boost port, to obtain the module controller network.

In an embodiment, the networking the candidate module controllers in the at least one module controller category by category to obtain a module controller network further includes: determining, in response to each Boost port in the power converter being connected to a single photovoltaic string, a PV port corresponding to each of the multiple networked module controllers.

In an embodiment, the networking the candidate module controllers in the at least one module controller category by category to obtain a module controller network further includes: performing, in response to at least one Boost port in the power converter being connected to multiple photovoltaic strings, pulse blocking on the power converter to obtain a pulse-blocked power converter; determining, in response to a circulating current being in one of the at least one Boost port of the pulse-blocked power converter, that the Boost port with the circulating current is connected to different photovoltaic strings connected in parallel; and determining a PV port corresponding to each of the multiple networked module controllers based on a current direction of the different photovoltaic strings connected in parallel.

In an embodiment, the networking the candidate module controllers in the at least one module controller category by category to obtain a module controller network further includes: obtaining, in response to no circulating current being in Boost ports of the pulse-blocked power converter, at least one serial number corresponding to one of the Boost ports, where the at least one serial number is used to indicate a networked module controller to be bypassed in a photovoltaic string connected to the Boost port; bypassing the networked module controller indicated by the at least one serial number; and determining the PV port corresponding to each of the multiple networked module controllers based on a current direction of each of the bypassed multiple photovoltaic strings.

In an embodiment, the networking the candidate module controllers in the at least one module controller category by category to obtain a module controller network further includes: obtaining, in response to no circulating current being in Boost ports of the pulse-blocked power converter, at least one serial number corresponding to one of the Boost ports, where the at least one serial number is used to indicate a networked module controller to be bypassed in a photovoltaic string connected to the Boost port; bypassing the networked module controller indicated by the at least one serial number; broadcasting, by the power converter, a PV identification command, where the PV identification command is used to indicate a Boost index identifier in which a current is to be changed at each disturbance moment; changing a current of each of the Boost ports one by one based on the Boost index identifier; determining a change of an output current of each of the multiple networked module controllers; and determining the PV port corresponding to the networked module controller based on the change of the output current.

In an embodiment, the bypassing the networked module controller indicated by the at least one serial number includes: determining the networked module controller indicated by the at least one serial number as at least one to-be-bypassed module controller; and transmitting an activation command to an active bypass switching transistor in each of the at least one to-be-bypassed module controller, to activate the at least one to-be-bypassed module controller to achieve active bypass.

In an embodiment, after transmitting an activation command to an active bypass switching transistor in each of the at least one to-be-bypassed module controller, the controller is further configured to: determine, in response to an unactivated networked module controller being connected between two activated module controllers, that an active bypass switching transistor in the unactivated networked module controller is in a passive bypass state.

In an embodiment, the obtaining, for each of multiple module controllers, a PLC link quality value between the module controller and a power converter and obtaining a PLC link quality value between the module controller and other module controller of the multiple module controllers includes: controlling the power converter to broadcast a search command on a public frequency band, where the search command includes a PLC link quality detection command and a PLC link quality minimum response threshold; and receiving, by the power converter, broadcast response messages fed back by multiple candidate module controllers to obtain the multiple candidate module controllers and multiple uplink PLC link quality values, where the uplink PLC link quality value refers to the PLC link quality value from the candidate module controllers to the power converter; the multiple candidate module controllers are part of the multiple module controllers whose detected downlink PLC link quality values each are greater than or equal to the PLC link quality minimum response threshold; and the downlink PLC link quality value refers to the PLC link quality value from the power converter to the candidate module controller.

In an embodiment, the obtaining, for each of multiple module controllers, a PLC link quality value between the module controller and a power converter and obtaining a PLC link quality value between the module controller and other module controller of the multiple module controllers includes: controlling the power converter to broadcast a search command on a public frequency band, where the search command includes a PLC link quality detection command; receiving, by the power converter, broadcast response messages fed back by multiple module controllers to obtain multiple uplink PLC link quality values, where the uplink PLC link quality value refers to the PLC link quality value from the module controller to the power converter; and determining part of the multiple module controllers whose uplink PLC link quality values each are greater than or equal to a PLC link quality minimum response threshold as multiple candidate module controllers.

In an embodiment, the obtaining, for each of multiple module controllers, a PLC link quality value between the module controller and a power converter and obtaining a PLC link quality value between the module controller and other module controller of the multiple module controllers includes: controlling the power converter to broadcast a search command on a public frequency band, where the search command includes a PLC link quality detection command and a PLC link quality minimum response threshold; receiving, by the power converter, broadcast response messages fed back by multiple filtered module controllers to obtain the multiple filtered module controllers and multiple uplink PLC link quality values, where the multiple filtered module controllers are part of the multiple module controllers whose detected downlink PLC link quality values each are greater than or equal to the PLC link quality minimum response threshold, the uplink PLC link quality value refers to the PLC link quality value from the filtered module controller to the power converter, and the downlink PLC link quality value refers to the PLC link quality value from the power converter to the filtered module controller; and determining part of the multiple filtered module controllers whose uplink PLC link quality values each are greater than or equal to the PLC link quality minimum response threshold as the multiple candidate module controllers.

Furthermore, the power converter shown in FIG. 9 further includes a communication interface 903 and a bus 904. The controller 900, the memory 901, the direct current conversion unit 902, and the communication interface 903 are connected to each other via the bus 904.

The memory 901 may include a high-speed random access memory (RAM) or a non-volatile memory, such as at least one disk memory. The network element of the system communicates with at least one other network element through at least one communication interface 903 (which may be wired or wireless). Internet, wide area network, local network, metropolitan area network and the like may be used. The bus 904 may be an ISA bus, PCI bus, EISA bus or the like. The bus may include an address bus, a data bus, a control bus and the like. For ease of representation, only one bidirectional arrow is shown in FIG. 9 to represent the bus, which does not imply that there is only one bus or one type of bus.

The controller 900 may be an integrated circuit chip with signal processing capabilities. During an implementation, the steps of the method may be performed by using an integrated logic circuit of hardware in the controller 900 or instructions in a software form. The controller 900 may be a general processor such as a central processing unit (CPU), a network processor (NP), a digital signal processor (DSP), an application specific integrated circuit (ASIC), a field-programmable gate array (FPGA) or other programmable logic devices, a discrete gate, a transistor logic device, or a discrete hardware component. The methods, steps and logical block diagrams disclosed in the embodiments of the present disclosure may be implemented or performed. The general processor may be a microprocessor, a conventional processor, or the like. Steps of the method disclosed in combination with the embodiments of the present disclosure may be directly implemented by a hardware decoding processor or implemented by a combination of a hardware module and a software module in the decoding processor. The software module may be in a mature storage medium in the art such as a random access memory, a flash memory, a read-only memory, a programmable read-only memory or an electrically erasable programmable memory, or a register. The storage medium is located in the memory 901, and the controller 900 reads the information in the memory 901 and, in combination with its hardware, performs the steps of the method of the embodiments.

A power system is provided according to an embodiment of the present disclosure. The power system includes multiple module controllers and at least one power converter. Each power converter is connected to at least one photovoltaic string, and each photovoltaic string includes multiple photovoltaic units connected in series. Each of the multiple photovoltaic units includes a photovoltaic module and a module controller connected in series. The photovoltaic module is configured to perform photovoltaic power generation and transmit, through a corresponding module controller, electrical energy to the power converter to which the photovoltaic unit is connected. The power converter is configured to perform the self-networking method for a module controller according to any one of the embodiments.

A computer-readable storage medium is provided according to an embodiment of the present disclosure. The computer-readable storage medium may be a non-volatile computer-readable storage medium or a volatile computer-readable storage medium. The computer-readable storage medium stores an instruction. The instruction, when executed by a computer, causes the computer to perform the self-networking method for the module controller.

The self-networking method includes: obtaining, for each of multiple module controllers, a PLC link quality value between the module controller and a power converter and obtaining a PLC link quality value between the module controller and other module controller of the multiple module controllers; dividing the multiple module controllers into at least one module controller category based on the PLC link quality values, where each of the at least one module controller category includes at least one candidate module controller, and the at least one candidate module controller is used to indicate a module controller having an actual physical connection with the power converter; and networking the candidate module controllers in the at least one module controller category by category to obtain a module controller network, where the module controller network includes multiple networked module controllers.

The dividing the multiple module controllers into at least one module controller category based on the PLC link quality values includes: classifying candidate module controllers meeting a preset condition among the multiple module controllers as one module controller category to create at least one module controller category, where the preset condition is that PLC link quality value between any two of the candidate module controllers is greater than or equal to a first quality threshold.

The networking the candidate module controllers in the at least one module controller category by category to obtain a module controller network includes: changing, by the power converter, an output voltage of each of the candidate module controllers in the module controller category one by one; determining a Boost port whose voltage varies in accordance with the output voltage of the candidate module controller, to obtain Boost ports corresponding to all the candidate module controllers; and networking, for each of the Boost ports, candidate module controllers that cause a voltage change of the Boost port, to obtain the module controller network

The networking the candidate module controllers in the at least one module controller category by category to obtain a module controller network further includes: determining, in response to each Boost port in the power converter being connected to a single photovoltaic string, a PV port corresponding to each of the multiple networked module controllers.

The networking the candidate module controllers in the at least one module controller category by category to obtain a module controller network further includes: performing, in response to at least one Boost port in the power converter being connected to multiple photovoltaic strings, pulse blocking on the power converter to obtain a pulse-blocked power converter; determining, in response to a circulating current being in one of the at least one Boost port of the pulse-blocked power converter, that the Boost port with the circulating current is connected to different photovoltaic strings connected in parallel; and determining a PV port corresponding to each of the multiple networked module controllers based on a current direction of the different photovoltaic strings connected in parallel

The networking the candidate module controllers in the at least one module controller category by category to obtain a module controller network further includes: obtaining, in response to no circulating current being in Boost ports of the pulse-blocked power converter, at least one serial number corresponding to one of the Boost ports, where the at least one serial number is used to indicate a networked module controller to be bypassed in a photovoltaic string connected to the Boost port; bypassing the networked module controller indicated by the at least one serial number; and determining the PV port corresponding to each of the multiple networked module controllers based on a current direction of each of the bypassed multiple photovoltaic strings.

The networking the candidate module controllers in the at least one module controller category by category to obtain a module controller network further includes: obtaining, in response to no circulating current being in Boost ports of the pulse-blocked power converter, at least one serial number corresponding to one of the Boost ports, where the at least one serial number is used to indicate a networked module controller to be bypassed in a photovoltaic string connected to the Boost port; bypassing the networked module controller indicated by the at least one serial number; broadcasting, by the power converter, a PV identification command, where the PV identification command is used to indicate a Boost index identifier in which a current is to be changed at each disturbance moment; changing a current of each of the Boost ports one by one based on the Boost index identifier; determining a change of an output current of each of the multiple networked module controllers; and determining the PV port corresponding to the networked module controller based on the change of the output current.

The bypassing the networked module controller indicated by the at least one serial number includes: determining the networked module controller indicated by the at least one serial number as at least one to-be-bypassed module controller; and transmitting an activation command to an active bypass switching transistor in each of the at least one to-be-bypassed module controller, to activate the at least one to-be-bypassed module controller to achieve active bypass.

After transmitting an activation command to an active bypass switching transistor in each of the at least one to-be-bypassed module controller, the controller is further configured to: determine, in response to an unactivated networked module controller being connected between two activated module controllers, that an active bypass switching transistor in the unactivated networked module controller is in a passive bypass state.

The obtaining, for each of multiple module controllers, a PLC link quality value between the module controller and a power converter, and obtaining a PLC link quality value between the module controller and other module controller of the multiple module controllers includes: controlling the power converter to broadcast a search command on a public frequency band, where the search command includes a PLC link quality detection command and a PLC link quality minimum response threshold; and receiving, by the power converter, broadcast response messages fed back by multiple candidate module controllers to obtain the multiple candidate module controllers and multiple uplink PLC link quality values, where the uplink PLC link quality value refers to the PLC link quality value from the candidate module controller to the power converter; the multiple candidate module controllers are part of the multiple module controllers whose detected downlink PLC link quality values each are greater than or equal to the PLC link quality minimum response threshold; and the downlink PLC link quality value refers to the PLC link quality value from the power converter to the candidate module controller.

The obtaining, for each of multiple module controllers, a PLC link quality value between the module controller and a power converter, and obtaining a PLC link quality value between the module controller and other module controller of the multiple module controllers includes: controlling the power converter to broadcast a search command on a public frequency band, where the search command includes a PLC link quality detection command; receiving, by the power converter, broadcast response messages fed back by multiple module controllers to obtain multiple uplink PLC link quality values, where the uplink PLC link quality value refers to the PLC link quality value from the module controllers to the power converter; and determining part of the multiple module controllers whose uplink PLC link quality values each are greater than or equal to a PLC link quality minimum response threshold as multiple candidate module controllers.

The obtaining, for each of multiple module controllers, a PLC link quality value between the module controller and a power converter, and obtaining a PLC link quality value between the module controller and other module controller of the multiple module controllers includes: controlling the power converter to broadcast a search command on a public frequency band, where the search command includes a PLC link quality detection command and a PLC link quality minimum response threshold; receiving, by the power converter, broadcast response messages fed back by multiple filtered module controllers to obtain the multiple filtered module controllers and multiple uplink PLC link quality values, where the multiple filtered module controllers are part of the multiple module controllers whose detected downlink PLC link quality values each are greater than or equal to the PLC link quality minimum response threshold, the uplink PLC link quality value refers to the PLC link quality value from the filtered module controller to the power converter, and the downlink PLC link quality value refers to the PLC link quality value from the power converter to the filtered module controller; and determining part of the multiple filtered module controllers whose uplink PLC link quality values each are greater than or equal to the PLC link quality minimum response threshold as the multiple candidate module controllers.

Those skilled in the art may clearly understand that, for convenience and brevity of description, for a detailed operation process of the foregoing system, apparatus and unit, reference may be made to a corresponding process in the foregoing embodiments of the method, which is not repeated herein.

In a case that the functions are implemented in a form of a software functional unit and sold or used as an independent product, the functions may be stored in a computer-readable storage medium. Based on such understanding, part of the technical solutions of the embodiments of the present disclosure which are essential or contribute to the conventional technology, or part of the technical solutions may be embodied in a form of a software product. The computer software product is stored in a storage medium and includes several instructions for causing a computer device (such as a personal computer, a server, or a network device) to perform all or part of the method described in the embodiments of the present disclosure. The storage medium described above includes various media capable of storing program codes, such as a USB flash disk, a movable hard disk, a Read Only Memory (ROM), a Random Access Memory (RAM), a magnetic disc or an optical disc.

In the description of the present disclosure, it should be noted that the terms "first", "second" and "third" are only for illustrative purposes, and cannot be understood as indicating or implying relative importance.

Finally, it should be noted that the above embodiments are only specific embodiments of the present disclosure, and are used to illustrate the technical solutions of the present disclosure, rather than to limit the present disclosure. The protection scope of the present disclosure is not limited thereto. Although the present disclosure is described in detail with reference to the foregoing embodiments, those skilled in the art should understand that those familiar with the technical field can make modifications or easily envisage changes to the technical solutions recorded in the foregoing embodiments within the technical scope disclosed in the present disclosure, or can obtain equivalent substitutions of some of the technical features. Such modifications, changes or substitutions do not deviate from the essence of the corresponding technical solutions from the spirit and scope of the technical solutions in the embodiments of the present disclosure, and shall be covered by the protection scope of the present disclosure. Therefore, the protection scope of the present disclosure shall be in accordance with the protection scope of the claims.

## Claims

1. A self-networking method for a module controller, comprising:
obtaining, for each of a plurality of module controllers, a power line carrier (PLC) link quality value between the module controller and a power converter, and obtaining a PLC link quality value between the module controller and other module controller of the plurality of module controllers;
dividing the plurality of module controllers into at least one module controller category based on the PLC link quality values, wherein each of the at least one module controller category comprises at least one candidate module controller, and the at least one candidate module controller is used to indicate a module controller having an actual physical connection with the power converter; and
networking the candidate module controllers in the at least one module controller category by category to obtain a module controller network, wherein the module controller network comprises a plurality of networked module controllers.

2. The self-networking method for a module controller according to claim 1, wherein the dividing the plurality of module controllers into at least one module controller category based on the PLC link quality values comprises:
classifying candidate module controllers meeting a preset condition among the plurality of module controllers as one module controller category to create at least one module controller category, wherein the preset condition is that the PLC link quality value between any two of the candidate module controllers is greater than or equal to a first quality threshold.

3. The self-networking method for a module controller according to claim 1, wherein the networking the candidate module controllers in the at least one module controller category by category to obtain a module controller network comprises:
changing, by the power converter, an output voltage of each of the candidate module controllers in the at least one module controller category one by one;
determining a Boost port whose voltage varies in accordance with the output voltage of the candidate module controller, to obtain Boost ports corresponding to all the candidate module controllers; and
networking, for each of the Boost ports, candidate module controllers that cause a voltage change of the Boost port, to obtain the module controller network.

4. The self-networking method for a module controller according to claim 1, wherein the networking the candidate module controllers in the at least one module controller category by category to obtain a module controller network comprises:
determining, in response to each Boost port in the power converter being connected to a single photovoltaic string, a photovoltaic string (PV) port corresponding to each of the plurality of networked module controllers.

5. The self-networking method for a module controller according to claim 1, wherein the networking the candidate module controllers in the at least one module controller category by category to obtain a module controller network further comprises:
performing, in response to at least one Boost port in the power converter being connected to a plurality of photovoltaic strings, pulse blocking on the power converter to obtain a pulse-blocked power converter; and
determining, in response to a circulating current being in one of the at least one Boost port of the pulse-blocked power converter, that the Boost port with the circulating current is connected to different photovoltaic strings connected in parallel; and determining a PV port corresponding to each of the plurality of networked module controllers based on a current direction of the different photovoltaic strings connected in parallel; or
obtaining, in response to no circulating current being in Boost ports of the pulse-blocked power converter, at least one serial number corresponding to one of the Boost ports, wherein the at least one serial number is used to indicate a networked module controller to be bypassed in a photovoltaic string connected to the Boost port; and
bypassing the networked module controller indicated by the at least one serial number; and determining the PV port corresponding to each of the plurality of networked module controllers based on a current direction of each of the bypassed plurality of photovoltaic strings; or
bypassing the networked module controller indicated by the at least one serial number; broadcasting, by the power converter, a PV identification command, wherein the PV identification command is used to indicate a Boost index identifier in which a current is to be changed at each disturbance moment; changing a current of each of the Boost ports one by one based on the Boost index identifier; determining a change of an output current of each of the plurality of networked module controllers; and determining the PV port corresponding to the networked module controller based on the change of the output current.

6. The self-networking method for a module controller according to claim 1, wherein the obtaining, for each of a plurality of module controllers, a PLC link quality value between the module controller and a power converter and a PLC link quality value between the module controller and other module controller of the plurality of module controllers comprises:
controlling the power converter to broadcast a search command on a public frequency band, wherein the search command comprises a PLC link quality detection command and a PLC link quality minimum response threshold; and receiving, by the power converter, broadcast response messages fed back by a plurality of candidate module controllers to obtain the plurality of candidate module controllers and a corresponding uplink PLC link quality value for each candidate module controller, wherein the uplink PLC link quality value refers to PLC link quality values from the candidate module controllers to the power converter; the plurality of candidate module controllers are part of the plurality of module controllers whose detected downlink PLC link quality values each are greater than or equal to the PLC link quality minimum response threshold; and the downlink PLC link quality value refers to the PLC link quality value from the power converter to the candidate module controller;
controlling the power converter to broadcast a search command on a public frequency band, wherein the search command comprises a PLC link quality detection command; receiving, by the power converter, broadcast response messages fed back by the plurality of module controllers to obtain a plurality of uplink PLC link quality values, wherein the uplink PLC link quality value refers to the PLC link quality value from the module controller to the power converter; and determining part of the plurality of module controllers whose uplink PLC link quality values each are greater than or equal to a PLC link quality minimum response threshold as the plurality of candidate module controllers; or
controlling the power converter to broadcast a search command on a public frequency band, wherein the search command comprises a PLC link quality detection command and a PLC link quality minimum response threshold; receiving, by the power converter, broadcast response messages fed back by a plurality of filtered module controllers to obtain the plurality of filtered module controllers and a plurality of uplink PLC link quality values, wherein the plurality of filtered module controllers are part of the plurality of module controllers whose detected downlink PLC link quality values each are greater than or equal to the PLC link quality minimum response threshold, the uplink PLC link quality value refers to PLC link quality value from the module controllers to the power converter, and the downlink PLC link quality value refers to PLC link quality value from the power converter to the plurality of filtered module controllers; and determining part of the plurality of filtered module controllers whose uplink PLC link quality values each are greater than or equal to the PLC link quality minimum response threshold as the plurality of candidate module controllers.

7. A power converter, comprising:
a direct current conversion unit, configured to convert a direct current power into an alternating current power;
a memory, configured to store an instruction; and
a controller, configured to
obtain, for each of a plurality of module controllers, a power line carrier (PLC) link quality value between the module controller and a power converter, and obtain a PLC link quality value between the module controller and other module controller of the plurality of module controllers;
divide the plurality of module controllers into at least one module controller category based on the PLC link quality values, wherein each of the at least one module controller category comprises at least one candidate module controller, and the at least one candidate module controller is used to indicate a module controller having an actual physical connection with the power converter; and
network the candidate module controllers in the at least one module controller category by category to obtain a module controller network, wherein the module controller network comprises a plurality of networked module controllers,
wherein the memory and the controller are connected to each other via lines.

8. The power converter according to claim 7, wherein for dividing the plurality of module controllers into at least one module controller category based on the PLC link quality values, the controller is configured to:
for each module controller of the plurality of module controllers,
determine an uplink PLC link quality value and a downlink PLC link quality value of the module controller, wherein the uplink PLC link quality value represents a channel quality from the module controller to the power converter, and the downlink PLC link quality value represents a channel quality from the power converter to the module controller; and
classify, in response to the candidate module controller meeting a preset condition, the candidate module controller as one module controller category to create at least one module controller category, wherein the preset condition is that the PLC link quality value between any two of the candidate module controllers is greater than or equal to a first quality threshold.

9. The power converter according to claim 7, wherein for networking the candidate module controllers in the at least one module controller category by category to obtain a module controller network, the controller is configured to:
change, by the power converter, an output voltage of each of the candidate module controllers in the at least one module controller category one by one;
determine a Boost port whose voltage varies in accordance with the output voltage of the candidate module controller, to obtain Boost ports corresponding to all the candidate module controllers; and
network, for each of the Boost ports, candidate module controllers that cause a voltage change of the Boost port to obtain the module controller network.

10. The power converter according to claim 7, wherein for networking the candidate module controllers in the at least one module controller category by category to obtain a module controller network, the controller is configured to:
determine, in response to each Boost port in the power converter being connected to a single photovoltaic string, a photovoltaic string (PV) port corresponding to each of the plurality of networked module controllers.

11. The power converter according to claim 10, wherein for networking the candidate module controllers in the at least one module controller category by category to obtain a module controller network, the controller is further configured to:
perform, in response to at least one Boost port in the power converter being connected to a plurality of photovoltaic strings, pulse blocking on the power converter to obtain a pulse-blocked power converter;
determine, in response to a circulating current being in one of the at least one Boost port of the pulse-blocked power converter, that the Boost port with the circulating current is connected to different photovoltaic strings connected in parallel; and
determine a PV port corresponding to each of the plurality of networked module controllers based on a current direction of the different photovoltaic strings connected in parallel.

12. The power converter according to claim 11, wherein for networking the candidate module controllers in the at least one module controller category by category to obtain a module controller network, the controller is further configured to:
obtain, in response to no circulating current being in Boost ports of the pulse-blocked power converter, at least one serial number corresponding to one of the Boost ports, wherein the at least one serial number is used to indicate a networked module controller to be bypassed in a photovoltaic string connected to the Boost port;
bypass the networked module controller indicated by the at least one serial number; and
determine the PV port corresponding to each of the plurality of networked module controllers based on a current direction of each of the bypassed plurality of photovoltaic strings; or
broadcast, by the power converter, a PV identification command, wherein the PV identification command is used to indicate a Boost index identifier in which a current is to be changed at each disturbance moment; change a current of each of the Boost ports one by one based on the Boost index identifier; determine a change of an output current of each of the plurality of networked module controllers; and determine the PV port corresponding to the networked module controller based on the change of the output current.

13. The power converter according to claim 12, wherein for bypassing the networked module controller indicated by the at least one serial number, the controller is further configured to:
determine the networked module controller indicated by the at least one serial number as at least one to-be-bypassed module controller; and
transmit an activation command to an active bypass switching transistor in each of the at least one to-be-bypassed module controller, to activate the at least one to-be-bypassed module controller to achieve active bypass.

14. The power converter according to claim 13, wherein after transmitting an activation command to an active bypass switching transistor in each of the at least one to-be-bypassed module controller, the controller is further configured to:
determine, in response to an unactivated networked module controller being connected between two activated module controllers, that an active bypass switching transistor in the unactivated networked module controller is in a passive bypass state.

15. The power converter according to claim 14, wherein for obtaining, for each of a plurality of module controllers, a PLC link quality value between the module controller and a power converter, and obtaining a PLC link quality value between the module controller and other module controller of the plurality of module controllers, the controller is further configured to:
control the power converter to broadcast a search command on a public frequency band, wherein the search command comprises a PLC link quality detection command and a PLC link quality minimum response threshold; and receive, by the power converter, broadcast response messages fed back by a plurality of candidate module controllers to obtain the plurality of candidate module controllers and a corresponding uplink PLC link quality value for each candidate module controller, wherein the uplink PLC link quality value refers to PLC link quality values from the candidate module controllers to the power converter; the plurality of candidate module controllers are part of the plurality of module controllers whose detected downlink PLC link quality values each are greater than or equal to the PLC link quality minimum response threshold; and the downlink PLC link quality value refers to the PLC link quality value from the power converter to the candidate module controller;
control the power converter to broadcast a search command on a public frequency band, wherein the search command comprises a PLC link quality detection command; receive, by the power converter, broadcast response messages fed back by the plurality of module controllers to obtain a plurality of uplink PLC link quality values, wherein the uplink PLC link quality value refers to the PLC link quality value from the module controller to the power converter; and determine part of the plurality of module controllers whose uplink PLC link quality values each are greater than or equal to a PLC link quality minimum response threshold as the plurality of candidate module controllers; or
control the power converter to broadcast a search command on a public frequency band, wherein the search command comprises a PLC link quality detection command and a PLC link quality minimum response threshold; receive, by the power converter, broadcast response messages fed back by a plurality of filtered module controllers to obtain the plurality of filtered module controllers and a plurality of uplink PLC link quality values, wherein the plurality of filtered module controllers are part of the plurality of module controllers whose detected downlink PLC link quality values each are greater than or equal to the PLC link quality minimum response threshold, the uplink PLC link quality value refers to PLC link quality value from the module controllers to the power converter, and the downlink PLC link quality value refers to PLC link quality value from the power converter to the plurality of filtered module controller; and determine part of the plurality of filtered module controllers whose uplink PLC link quality values each are greater than or equal to the PLC link quality minimum response threshold as the plurality of candidate module controllers.
